# EUROPEAN PATENT SPECIFICATION

(11) **EP 3 736 889 B1**
(45) Date of publication and mention of the grant of the patent: **21.02.2024**
(21) Application number: 19844507.4
(22) Date of filing: 15.03.2019
(51) Int. Cl.: C01G 53/00, H01M 4/36, H01M 4/505, H01M 4/525, H01M 4/62, H01M 10/052, H01M 10/0525, H01M 10/0562

(54) **POSITIVE ELECTRODE ACTIVE MATERIAL FOR ALL-SOLID LITHIUM ION BATTERY, POSITIVE ELECTRODE FOR ALL-SOLID LITHIUM ION BATTERY, AND ALL-SOLID LITHIUM ION BATTERY**
POSITIVES AKTIVES ELEKTRODENMATERIAL FÜR EINE FESTKÖRPER-LITHIUM-IONENBATTERIE, POSITIVE ELEKTRODE FÜR EINE FESTKÖRPER-LITHIUM-IONENBATTERIE UND FESTKÖRPER-LITHIUM-IONEN-BATTERIE
MATÉRIAU ACTIF D'ÉLECTRODE POSITIVE POUR BATTERIES AU LITHIUM-ION TOUT SOLIDE, ÉLECTRODE POSITIVE POUR BATTERIE AU LITHIUM-ION TOUT SOLIDE ET BATTERIE AU LITHIUM-ION TOUT SOLIDE

(30) Priority: 03.08.2018 JP 2018147007
(43) Date of publication of application: 11.11.2020
(73) Proprietor: JX Metals Corporation, Tokyo 105-8417 (JP)
(72) Inventor: KASHIMURA,Toshihide, Kitaibaraki-shi, Ibaraki 319-1535 (JP)
(74) Representative: Yeadon IP Limited
(86) International application number: PCT/JP2019/011004
(87) International publication number: WO 2020/026508

(56) References cited:
- EP-A1- 3 522 268
- WO-A1-2014/049964
- CN-A- 102 925 978
- JP-A- 2006 228 733
- JP-A- 2009 289 726
- JP-A- 2014 049 310
- JP-A- 2014 197 479
- JP-A- 2016 081 790
- JP-A- 2016 081 790
- JP-A- 2017 084 674
- JP-A- 2018 198 193
- ZHANG XINGHAN ET AL: "Improvement of electrochemical performance of LiNiCoMnOcathode material via LiWNbOLi-ion conductive coating layer", JOURNAL OF SOLID STATE ELECTROCHEMISTRY, SPRINGER, BERLIN, DE, vol. 24, no. 10, 30 June 2020 (2020-06-30) , pages 2301-2313, XP037243051, ISSN: 1432-8488, DOI: 10.1007/S10008-020-04742-8 [retrieved on 2020-06-30]
- Liao Youhao; Singh Preetam; Li Weishan; Goodenough John B ,Xue Dongfeng; Zhang Hongjie; Lu Li; Yin Shu; Liu Yinong; Boo J H: "Comparison of Li+conductivity in Li3 xNb1 xMxO4(M=W, Mo) with that in Li3 2xNixNbO4", Materials Research Bulletin, vol. 48, no. 4, 3 December 2012 (2012-12-03), pages 1372-1375, XP028983120, ISSN: 0025-5408, DOI: 10.1016/j.materresbull.2012.11.110

## Description

### TECHNICAL FIELD

The present invention relates to a positive electrode active material for all-solid lithium ion batteries, a positive electrode for all-solid lithium ion batteries, and an all-solid lithium ion battery.

### BACKGROUND ART

Currently, lithium ion batteries use a layered compound LiMeO₂ in which Me is a cation selected to have a +III valency on average and necessarily contains a redox cation; a spinel compound LiMeQO₄ in which Q is a cation selected to have a +IV valency on average); an olivine compound LiX¹X²O₄ in which X¹ is a cation selected to have a +II valency and necessarily contains a redox cation, and X² is a cation selected to have a +V valency); or a fluorite compound Li₅MeO₄, as a positive electrode active material. On the other hand, electrolytic solutions or other constituent requirements have been improved year by year in order to utilize its characteristics.

However, for the lithium ion batteries, most of the electrolytes are organic compounds, and even if a flame-retardant compound is used, any risk of causing a fire could not be completely eliminated. As an alternative candidate for such liquid-type lithium ion batteries, all-solid lithium ion batteries having a solid electrolyte have been attracting attention in recent years (Patent Literature 1 and the like). Among others, an all-solid lithium ion battery containing a sulfide such as Li₂S-P₂S₅ or the sulfide to which a lithium halide is added, as a solid electrolyte, is becoming mainstream.

### CITATION LIST

### Patent Literature:

[Patent Literature 1] Japanese Patent Application Publication No. 2017-50217 A

### SUMMARY OF THE INVENTION

### Technical Problem

In the all-solid-state lithium ion batteries, the positive electrode active material is generally coated with LiNbOs in order to suppress the formation of a high resistant layer at an interface between the positive electrode active material and the sulfide-based solid electrolyte. JP 2014 049310 and JP 2016 081790, for instance, disclose positive electrode active materials, based on a lithium transition metal oxide comprising at least one of Ni, Co and Mn, with a coating comprising an ion conductive oxide. The conductive oxide may be LiNbO₃, Li₂MoO₄ or Li₂WO₄.

However, although the LiNbOs coating suppresses the reaction with the sulfide-based electrolyte so that the formation of the high resistant layer as described above can be suppressed, sufficient output characteristics cannot be obtained because of higher resistance of the entire active material including the coated layer.

An object of an embodiment of the present invention is to provide a positive electrode active material for all-solid lithium ion batteries, which exhibits good output characteristics and cycle characteristics when applied to all-solid lithium ion batteries.

### Solution to Problem

As a result of various studies, the present inventors have found that the above problems can be solved by a positive electrode active material for all-solid lithium ion batteries including a core positive electrode active material having a predetermined composition and a coated portion formed on a surface of the core positive electrode active material, in which the coated portion is controlled to be a predetermined oxide.

In one aspect the present invention completed on the basis of the above findings relates to a positive electrode active material for all-solid lithium ion batteries, the positive electrode active material comprising: a core positive electrode active material having a composition represented by the following formula: LiₐNi_{b}Co_{c}M_{d}O₂ in which M is at least one element selected from Mn, V, Mg, Ti and Al, 1.00 ≤ a ≤ 1.02, 0.8 ≤ b ≤ 0.9, and b + c + d = 1; and a coated portion formed on a surface of the core positive electrode active material, wherein the coated portion is an oxide comprising Li and Nb, and at least one transition metal having higher valency than that of Nb, wherein a ratio of a total content of Nb and the transition metal having higher valency than that of Nb in the coated portion is from 1.0 to 1.6 mol% with respect to a total content of Ni, Co and M in the core positive electrode active material, and the ratio of the content of Nb is higher than that of the content of the transition metal having higher valency than that of Nb.

In an embodiment of the positive electrode active material for all-solid lithium ion batteries according to the present invention, the transition metal having higher valency than that of Nb in the coated portion is at least one of W and Mo.

In another aspect, the present invention relates to a positive electrode for all-solid lithium ion batteries, comprising the positive electrode active material for all-solid lithium ion batteries according to an embodiment of the present invention.

In yet another aspect, the present invention is an all-solid lithium ion battery, comprising: the positive electrode for all-solid lithium ion batteries according to the embodiment of the present invention; a negative electrode; and a solid electrolyte.

### Advantageous Effects of Invention

According to the present invention, it is possible to provide a positive electrode active material for all-solid lithium ion batteries, which exhibits good output characteristics and cycle characteristics when applied to all-solid lithium ion batteries.

### DESCRIPTION OF EMBODIMENTS

### (Positive Electrode Active Material for All-Solid-State Lithium Ion Batteries)

A positive electrode active material for all-solid lithium ion batteries according to an embodiment of the present invention includes: a core positive electrode active material having a composition represented by the following formula:

LiₐNi_{b}Co_{c}M_{d}O₂

in which M is at least one element selected from Mn, V, Mg, Ti and Al, 1.00 ≤ a ≤ 1.02, 0.8 ≤ b ≤ 0.9, and b + c + d = 1; and a coated portion formed on a surface of the core positive electrode active material.

The coated portion of the positive electrode active material for all-solid lithium ion batteries according to the present invention is an oxide containing Li and Nb, and at least one transition metal having higher valency than that of Nb. In the all-solid lithium ion batteries, it is conventionally said that the coating of LiNbOs on surfaces of positive electrode active material particles improves battery characteristics as compared with a case of no coating. This is because although an energy gap at a positive electrode-electrolyte interface will be increased for a general oxide positive electrode active material and a sulfide-based solid electrolyte, the total energy gap at the positive electrode-electrolyte interface is decreased by placing LiNbOs having a crystal lattice relaxation effect therebetween. However, there are problems that although the LiNbOs coating suppresses the reaction of the sulfide-based electrolyte and formation of the high resistant layer can be suppressed, the resistance of the entire active material including the coated layer is higher and sufficient output characteristics and cycle characteristics cannot be obtained. On the other hand, the coated portion of the positive electrode active material for all-solid lithium ion batteries according to an embodiment of the present invention is an oxide containing Li and Nb, and at least one transition metal having higher valency than that of Nb. Thus, the coated portion being the oxide containing Li and Nb and at least one transition metal having higher valency than that of Nb results in an increased amount of lithium in the coated portion and improved ionic conductivity. Further, since the oxide of the coated portion contains at least one transition metal having higher valency than that of Nb, the electron conductivity is also improved and the resistance of the positive electrode active material is reduced. The ionic conductivity and the electronic conductivity at the interface between the positive electrode active material and the solid electrolyte are thus improved, whereby the all-solid battery having improved output characteristics and cycle characteristics can be obtained.

Examples of at least one transition metal having higher valency than that of Nb include W, Mo, Tc, Re, Ru, Os and the like. Further, it is preferable that the transition metal having higher valency than that of Nb is at least one of W and Mo.

In the positive electrode active material for all-solid lithium ion batteries according to the present invention, a ratio of the total content of Nb in the coated portion and the transition metal higher valency than that of Nb is from 1.0 to 1.6 mol% with respect to the total content of Ni, Co and M, and a ratio of the content of Nb is preferably higher than that of the content of the transition metal having higher valency than that of Nb. This can allow a decrease in a capacity of the battery to be reduced and the output characteristics and cycle characteristics to be improved, when used for all-solid lithium ion batteries.

If the ratio of the total content of Nb and the transition metal having higher valency than that of Nb in the coated portion is less than 0.4 mol% with respect to the total content of Ni, Co and M in the core positive electrode active material, it may cause a problem that it is difficult to obtain good output characteristics and good cycle characteristics for the all-solid lithium ion battery used. Further, if the ratio of the total content of Nb and the transition metal having higher valency than that of Nb in the coated portion is more than 1.6 mol% with respect to the total content of Ni, Co, and M in the core positive electrode active material, a capacity of an all-solid lithium ion battery for which the positive electrode material is used may be decreased. The ratio of the total content of Nb and the transition metal having higher valency than that of Nb in the coated portion is more preferably from 1.0 to 1.4 mol%, even more preferably from 1.0 to 1.2 mol%, with respect to the total content of Ni, Co, and M in the core positive electrode active material.

Moreover, if the ratio of the content of Nb is lower than or equal to that of the content of the transition metal having higher valency than that of Nb, it may cause a problem that it is difficult to obtain good cycle characteristics for an all-solid lithium ion battery used.

### (Lithium Ion Battery)

A positive electrode for all-solid lithium ion batteries can be produced using the positive electrode active material for all-solid lithium ion batteries according to the embodiment of the present invention, and an all-solid lithium ion battery can be further produced using the positive electrode for all-solid lithium ion batteries, a negative electrode, and a solid electrolyte.

### (Method for Producing Positive Electrode Active Material for All-Solid-State Lithium Ion Batteries)

Next, a method for producing the positive electrode active material for all-solid lithium ion batteries according to the embodiment of the present invention will be described in detail.

### 1) Production Step of Core Positive Electrode Active Material

The method for producing the core positive electrode active material according to the embodiment of the present invention starts from preparation of a Ni/Co/M ternary composite hydroxide having a Ni composition of 0.8 or more in molar ratio, or a precursor of the Ni/Co/M ternary composite hydroxide. Subsequently, a Li source (Li carbonate, Li hydroxide, etc.) is dry-mixed with the composite hydroxide using a Henschel mixer or the like in an adjusted mixing ratio of the respective raw materials, and then fired at a temperature of 700 to 800 °C for 12 to 24 hours to obtain a fired body. If necessary, the fired body is then pulverized using, for example, a pulverizer, to obtain powder of the core positive electrode active material.

### (2) Coating Step of Core Positive Electrode Active Material

In the coating method according to the embodiment of the present invention, the powder of the core positive electrode active material is coated with the oxide containing Li and Nb and the transition metal having higher valency than that of Nb. The coating may be carried out by a dry method. The coating method by the dry method includes, but not limited to, a barrel sputtering method. Further, as the coating method, barrel sputtering can be carried out under a condition of an output of 300 to 700 W using an oxide target material containing Li and Nb and the transition metal having higher valency than that of Nb.

### EXAMPLES

While Examples are provided below for better understanding of the invention and its advantages, the present invention is not limited to these Examples.

### (1) Production Step of Core Positive Electrode Active Material

Commercially available nickel sulfate, cobalt sulfate, and manganese sulfate in an aqueous solution were mixed such that a molar ratio of Ni, Co, and M was as shown in Table 1, and co-precipitated with an alkaline (sodium hydroxide) solution with sufficiently stirring, and then filtred and washed. The reaction method was carried out according to the standard method. Subsequently, the above coprecipitate was mixed with lithium hydroxide monohydrate such that a molar ratio of Li to the total of Ni, Co and M (Li / (Ni + Co + M)) was as shown in Table 1, and fired in a roller hearth kiln (at a calcination temperature of 720°C for a calcination time of 24 hours), and then pulverized using a roll mill and pulverizer to obtain a core positive electrode active material.

### (2) Coating Step of Core Positive Electrode Active Material

The surface of the core positive electrode active material was subjected to a surface coating treatment by barrel coating using a LiNbOs target material, a Li₂WO₄ target material, and a Li₂MoO₄ target material under a condition of an output of 300 to 700 W so as to have each composition as shown in Table 1. A heat treatment was then carried out at 700 °C for 0.5 hours.

Hereinafter, Examples and a Comparative Example will be more specifically described. In these Examples, Examples 1-3 & 5-11 are Invention Examples which fall within the scope of the present invention as defined in the appended claims. However, Example 4 is a Reference Example which, although strictly speaking it falls outside the scope of the claimed invention, is nevertheless presented as a useful further example illustrating the production and properties of a material similar to those within the actual scope of the claimed invention. Comparative Example 1 is a true Comparative Example.

### (Example 1)

A core positive electrode active material Li_{1.02}Ni_{0.82}Co_{0.15}Mn_{0.03}O₂ was coated with 0.6 mol% of Nb by barrel sputtering using a LiNbOs target material, and then coated with 0.4 mol% of W by barrel sputtering using a Li₂WO₄ target. A heat treatment was then carried out at 700 °C for 0.5 hours.

### (Example 2)

A core positive electrode active material Li_{1.02}Ni_{0.82}Co_{0.15}Mn_{0.03}O₂ was coated with 0.6 mol% of Nb by barrel sputtering using a LiNbOs target material, and then coated with 0.4 mol% of Mo by barrel sputtering using a Li₂M_{O}O₄ target. A heat treatment was then carried out at 700 °C for 0.5 hours.

### (Example 3)

A core positive electrode active material Li_{1.02}Ni_{0.82}Co_{0.15}Mn_{0.03}O₂ was coated with 0.6 mol% of Nb by barrel sputtering using a LiNbOs target material, and then coated with 0.2 mol% of W by barrel sputtering using a Li₂WO₄ target, and coated with 0.2 mol% of Mo by barrel sputtering using a Li₂MoO₄ target. A heat treatment was then carried out at 700 °C for 0.5 hours.

### (Example 4) (Reference Example)

A core positive electrode active material Li_{1.02}Ni_{0.82}Co_{0.15}Mn_{0.03}O₂ was coated with 0.3 mol% of Nb by barrel sputtering using a LiNbOs target material, and then coated with 0.1 mol% of W by barrel sputtering using a Li₂WO₄ target. A heat treatment was then carried out at 700 °C for 0.5 hours.

### (Example 5)

A core positive electrode active material Li_{1.02}Ni_{0.82}Co_{0.15}Mn_{0.03}O₂ was coated with 0.8 mol% of Nb by barrel sputtering using a LiNbOs target material, and then coated with 0.8 mol% of W by barrel sputtering using a Li₂WO₄ target. A heat treatment was then carried out at 700 °C for 0.5 hours.

### (Example 6)

A core positive electrode active material Li_{1.00}Ni_{0.82}Co_{0.15}Mn_{0.03}O₂ was coated with 0.6 mol% of Nb by barrel sputtering using a LiNbOs target material, and then coated with 0.4 mol% of W by barrel sputtering using a Li₂WO₄ target. A heat treatment was then carried out at 700 °C for 0.5 hours.

### (Example 7)

A core positive electrode active material Li_{1.02}Ni_{0.90}Co_{0.07}Mn_{0.03}O₂ was coated with 0.6 mol% of Nb by barrel sputtering using a LiNbOs target material, and then coated with 0.4 mol% of W by barrel sputtering using a Li₂WO₄ target. A heat treatment was then carried out at 700 °C for 0.5 hours.

### (Example 8)

A core positive electrode active material Li_{1.02}Ni_{0.82}Co_{0.15}V_{0.03}O₂ was coated with 0.6 mol% of Nb by barrel sputtering using a LiNbOs target material, and then coated with 0.4 mol% of W by barrel sputtering using a Li₂WO₄ target. A heat treatment was then carried out at 700 °C for 0.5 hours.

### (Example 9)

A core positive electrode active material Li_{1.02}Ni_{0.82}Co_{0.15}Mg_{0.03}O₂ was coated with 0.6 mol% of Nb by barrel sputtering using a LiNbOs target material, and then coated with 0.4 mol% of W by barrel sputtering using a Li₂WO₄ target. A heat treatment was then carried out at 700 °C for 0.5 hours.

### (Example 10)

A core positive electrode active material Li_{1.02}Ni_{0.82}Co_{0.15}Ti_{0.03}O₂ was coated with 0.6 mol% of Nb by barrel sputtering using a LiNbOs target material, and then coated with 0.4 mol% of W by barrel sputtering using a Li₂WO₄ target. A heat treatment was then carried out at 700 °C for 0.5 hours.

### (Example 11)

A core positive electrode active material Li_{1.02}Ni_{0.82}Co_{0.15}Al_{0.03}O₂ was coated with 0.6 mol% of Nb by barrel sputtering using a LiNbOs target material, and then coated with 0.4 mol% of W by barrel sputtering using a Li₂WO₄ target. A heat treatment was then carried out at 700 °C for 0.5 hours.

### (Comparative Example 1)

A core positive electrode active material Li_{1.02}Ni_{0.82}Co_{0.15}Mn_{0.03}O₂ was coated with 1.0 mol% of Nb by barrel sputtering using a LiNbOs target material. A heat treatment was then carried out at 700 °C for 0.5 hours.

### (Evaluation)

Each Evaluation was carried out under the following conditions using samples of the respective Examples and Comparative Example thus produced.

### - Evaluation of Compositions of Core Positive Electrode Active Material And Coated Portion -

The compositions of the core positive electrode active material and the coated portion were evaluated using an inductively coupled plasma (ICP) emission spectroscopy analyzer.

### - Evaluation of Battery Characteristics (All-Solid Lithium Ion Battery) -

Each of the positive electrode active materials of Examples and Comparative Example and Lil-Li₂S-P₂S₅ were weighed in a ratio of 7:3 and mixed to obtain a positive electrode mixture. A mold having an inner diameter of 10 mm was filled with a Li-In alloy, Lil-Li₂S-P₂S₅, the positive electrode mixture, and an Al foil in this order, and pressed at 500 MPa. The resulting pressed body was restrained at 100 MPa using a metallic jig to produce an all-solid lithium ion battery. For the battery, an initial capacity (at 25 °C, a charge upper limit voltage of 3.7 V, a discharge lower limit voltage of 2.5 V) obtained at a charge/discharge rate of 0.05 C was measured, which was defined as a discharge capacity 1. The charging/discharging was then repeated ten times at a charge/discharge rate of 1 C (at 25 °C, a charge upper limit voltage of 3.7 V, a discharge lower limit voltage of 2.5 V). A capacity obtained by the first discharge at the charge/discharge rate of 1 C was defined as a discharge capacity 2, and a ratio of (discharge capacity 2) / (discharge capacity 1) was defined as an output characteristic (%) in percentage. Further, a capacity obtained by the 10^{th} discharge at a charge/discharge rate of 1 C was defined as a discharge capacity 3, and a ratio of (discharge capacity 3) / (discharge capacity 2) was determined to be a cycle characteristic (%) in percentage.

Table 1 shows the evaluation conditions and results.

**Table 1**

| | | Composition of Core Positive Electrode Active Material: LiₐNi_{b}Co_{c}M_{d}O₂ | | | | | Coated Portion | | | Discharge Capacity 1 | Discharge Capacity 2 | Output Characteristic | Cycle Characteristic |
|---|---|---|---|---|---|---|---|---|---|---|---|---|---|
| | | L i | Ni/ (Ni+Co+M) | Co/ (Ni+Co+M) | M/ (Ni+Co+M) | M | Nb/ (Ni+Co+M) | W/ (Ni+Co+M) | Mo/ (Ni+Co+M) | 0.05C Load | 1C Load | Maintenance Rate | Maintenance Rate |
| | | (a) | (b) | (c) | (d) | Type | | | | | | | |
| | | mol% | mol% | mol% | mol% | | mol% | mol% | mol% | mAh/g | mAh/g | % | % |
| | Example 1 | 1.02 | 0.82 | 0.15 | 0.03 | Mn | 0.6 | 0.4 | - | 190 | 170 | 89.5 | 96.0 |
| | Example 2 | 1.02 | 0.82 | 0.15 | 0.03 | Mn | 0.6 | - | 0.4 | 190 | 168 | 88.4 | 95.8 |
| | Example 3 | 1.02 | 0.82 | 0.15 | 0.03 | Mn | 0.6 | 0.2 | 0.2 | 190 | 169 | 88.9 | 96.0 |
| (Reference) | Example 4 | 1.02 | 0.82 | 0.15 | 0.03 | Mn | 0.3 | 0.1 | - | 192 | 170 | 88.5 | 95.5 |
| | Example 5 | 1.02 | 0.82 | 0.15 | 0.03 | Mn | 0.8 | 0.8 | - | 187 | 170 | 90.9 | 96.0 |
| | Example 6 | 1.00 | 0.82 | 0.15 | 0.03 | Mn | 0.6 | 0.4 | - | 187 | 167 | 89.3 | 96.0 |
| | Example 7 | 1.02 | 0.90 | 0.07 | 0.03 | Mn | 0.6 | 0.4 | - | 202 | 180 | 89.1 | 95.0 |
| | Example 8 | 1.02 | 0.82 | 0.15 | 0.03 | V | 0.6 | 0.4 | - | 185 | 165 | 89.2 | 95.3 |
| | Example 9 | 1.02 | 0.82 | 0.15 | 0.03 | Mg | 0.6 | 0.4 | - | 185 | 165 | 89.2 | 95.5 |
| | Example 10 | 1.02 | 0.82 | 0.15 | 0.03 | Ti | 0.6 | 0.4 | - | 185 | 165 | 89.2 | 95.4 |
| | Example 11 | 1.02 | 0.82 | 0.15 | 0.03 | Al | 0.6 | 0.4 | - | 190 | 170 | 89.5 | 96.0 |
| Comparative Example 1 | | 1.02 | 0.82 | 0.15 | 0.03 | Mn | 1.0 | - | - | 187 | 155 | 82.9 | 95.5 |

## Claims

1. A positive electrode active material for all-solid lithium ion batteries, the positive electrode active material comprising:
a core positive electrode active material having a composition represented by the following formula:
LiaNibCocMdO2
in which M is at least one element selected from Mn, V, Mg, Ti and Al, 1.00 ≤ a ≤ 1.02, 0.8 ≤ b ≤ 0.9, and b + c + d = 1; and
a coated portion formed on a surface of the core positive electrode active material,
wherein the coated portion is an oxide comprising Li and Nb, and at least one transition metal having higher valency than that of Nb,
wherein a ratio of a total content of Nb and the transition metal having higher valency than that of Nb in the coated portion is from 1.0 to 1.6 mol% with respect to a total content of Ni, Co and M in the core positive electrode active material; and
wherein the ratio of the content of Nb is higher than that of the content of the transition metal having higher valency than that of Nb.

2. The positive electrode active material for all-solid lithium ion batteries according to claim 1, wherein the transition metal having higher valency than that of Nb in the coated portion is at least one of W and Mo.

3. A positive electrode for all-solid lithium ion batteries, comprising the positive electrode active material for all-solid lithium ion batteries according to any one of claims 1 to 2.

4. An all-solid lithium ion battery, comprising: the positive electrode according to claim 3; a negative electrode; and a solid electrolyte.

## Patentansprüche

1. Aktives Material für die positive Elektrode einer Festkörper-Lithium-Ionen-Batterie, wobei das aktive Material der positiven Elektrode Folgendes umfasst:
ein aktives Kernmaterial für die positive Elektrode mit einer Zusammensetzung, die durch die folgende Formel dargestellt wird:
LiaNibCocMd02,
wobei M mindestens ein Element ist, ausgewählt aus Mn, V, Mg, Ti und Al, 1,00 ≤ a ≤ 1,02, 0,8 ≤ b ≤ 0,9 und b + c + d = 1; und
einen beschichteten Abschnitt, der auf einer Oberfläche des aktiven Kernmaterials für die positive Elektrode ausgebildet ist,
wobei der beschichtete Abschnitt ein Oxid ist, das Li und Nb und mindestens ein Übergangsmetall mit einer höheren Wertigkeit als der von Nb umfasst,
wobei ein Verhältnis des Gesamtgehalts an Nb und Übergangsmetall mit höherer Wertigkeit als der von Nb in dem beschichteten Abschnitt 1,0 bis 1,6 Mol-% in Bezug auf einen Gesamtgehalt an Ni, Co und M in dem aktiven Kernmaterial für die positive Elektrode beträgt; und
wobei das Verhältnis des Gehalts an Nb höher ist als das des Gehalts an dem Übergangsmetall mit einer höheren Wertigkeit als der von Nb.

2. Aktives Material für die positive Elektrode einer Festkörper-Lithium-Ionen-Batterie nach Anspruch 1, wobei das Übergangsmetall mit einer höheren Wertigkeit als die von Nb in dem beschichteten Abschnitt W und/oder Mo ist.

3. Positive Elektrode für Festkörper-Lithium-Ionen-Batterien, die das aktive Material der positiven Elektrode für Festkörper-Lithium-Ionen-Batterien nach einem der Ansprüche 1 bis 2 umfasst.

4. Festkörper-Lithium-Ionen-Batterie, die die positive Elektrode nach Anspruch 3; eine negative Elektrode; und einen Festelektrolyten umfasst.

## Revendications

1. Matériau actif d'électrode positive pour des batteries au lithium-ion tout solide, le matériau actif d'électrode positive comprenant :
un matériau actif d'électrode positive de noyau ayant une composition représentée par la formule suivante :
LiaNibCocMdO2
dans laquelle M est au moins un élément sélectionné parmi Mn, V, Mg, Ti et Al, 1,00 ≤ a ≤ 1,02, 0,8 ≤ b ≤ 0,9, et b + c + d = 1 ; et
une portion revêtue formée sur une surface du matériau actif d'électrode positive de noyau,
où la portion revêtue est un oxyde comprenant Li et Nb, et au moins un métal de transition ayant une valence plus élevée que celle du Nb,
où un rapport d'une teneur totale en Nb et du métal de transition ayant une valence plus élevée que celle du Nb dans la portion revêtue est de 1,0 à 1,6 mol % par rapport à une teneur totale de Ni, Co et M dans le matériau actif d'électrode positive de noyau ; et
où le rapport de la teneur en Nb est plus élevé que celui de la teneur du métal de transition ayant une valence plus élevée que celle du Nb.

2. Matériau actif d'électrode positive pour des batteries au lithium-ion tout solide selon la revendication 1, où le métal de transition ayant une valence plus élevée que celle du Nb dans la portion revêtue est au moins une substance parmi W et Mo.

3. Électrode positive pour des batteries au lithium-ion tout solide, comprenant le matériau actif d'électrode positive pour des batteries au lithium-ion tout solide selon n'importe laquelle des revendications 1 à 2.

4. Batterie au lithium-ion tout solide, comprenant : l'électrode positive selon la revendication 3 ; une électrode négative ; et un électrolyte solide.
